# EUROPÄISCHE PATENTSCHRIFT

(11) **EP 2 050 155 B1**
(45) Veröffentlichungstag und Bekanntmachung des Hinweises auf die Patenterteilung: **22.12.2010**
(21) Anmeldenummer: 07786491.6
(22) Anmeldetag: 01.08.2007
(51) Int. Cl.: H01M 4/88, H01M 4/86

(54) **ELEKTRODE FÜR EINE SCHMELZKARBONAT-BRENNSTOFFZELLE UND VERFAHREN ZU IHRER HERSTELLUNG**
ELECTRODE FOR A MOLTEN CARBONATE FUEL CELL AND PROCESS FOR ITS PRODUCTION
ÉLECTRODE POUR UNE PILE À COMBUSTIBLE À CARBONATE FONDU ET SON PROCÉDÉ DE FABRICATION

(30) Priorität: 07.08.2006 DE 102006036849; 10.10.2006 DE 102006047823
(43) Veröffentlichungstag der Anmeldung: 22.04.2009
(73) Patentinhaber: MTU Onsite Energy GmbH, 85521 Ottobrunn (DE)
(72) Erfinder: BEDNARZ, Marc, 82024 Taufkirchen (DE); PAULUS-RODATZ, Ursula, 84036 Landshut (DE)
(74) Vertreter: Winter, Josef
(86) Internationale Anmeldenummer: PCT/EP2007/006804
(87) Internationale Veröffentlichungsnummer: WO 2008/017409

(56) Entgegenhaltungen:
- EP-A- 0 466 418
- DE-A1- 1 421 572
- JP-A- 1 052 382
- US-A- 4 150 076

## Beschreibung

Die vorliegende Erfindung betrifft ein Verfahren zur Herstellung einer Elektrode für eine Schmelzkarbonat-Brennstoffzelle, mit einer elektrochemisch aktiven, mit Hohlräumen versehenen Elektrodenschicht, wobei zur Herstellung einer elektrochemisch aktiven Elektrodenschicht eine Mischung hergestellt wird, die mindestens ein aus ersten Partikeln bestehendes Elektrodenmaterial für das Elektrodengerüst, mindestens ein Porenbildnermaterial und mindestens ein Bindemittel enthält, und wobei der resultierende Grünling erhitzt wird, so dass das mindestens eine Porenbildnermaterial und das mindestens eine Bindemittel ausgebrannt werden.

Brennstoffzellen sind Primärelemente, in denen eine chemische Reaktion zwischen einem Gas und einem Elektrolyten stattfindet. Im Prinzip wird in Umkehrung der Elektrolyse von Wasser ein wasserstoffhaltiges Brenngas an eine Anode und ein sauerstoffhaltiges Kathodengas an eine Kathode herangeführt und zu Wasser umgesetzt. Die freiwerdende Energie wird als elektrische Energie entnommen.

Schmelzkarbonat-Brennstoffzellen (Molten Carbonate Fuel Cells, MCFC) sind bspw. in der DE 43 03 136 C1 und der DE 195 15 457 C1 beschrieben. Sie bestehen in ihrem elektrochemisch aktiven Bereich aus einer Anode, einer Elektrolytmatrix und einer Kathode. Als Elektrolyt dient eine Schmelze aus einem oder mehreren Alkalimetallkarbonaten, die in eine feinporöse Elektrolytmatrix aufgenommen ist. Der Elektrolyt trennt die Anode von der Kathode und dichtet die Gasräume von Anode und Kathode gegeneinander ab. Beim Betrieb einer Schmelzkarbonat-Brennstoffzelle wird der Kathode ein Sauerstoff und Kohlendioxid enthaltendes Gasgemisch, meist Luft und Kohlendioxid, zugeführt. Der Sauerstoff wird reduziert und mit dem Kohlendioxid zu Karbonationen umgesetzt, die in den Elektrolyten wandern. Der Anode wird wasserstoffhaltiges Brenngas zugeführt, wobei der Wasserstoff oxidiert und mit den Karbonationen aus der Schmelze zu Wasser und Kohlendioxid umgesetzt wird. Das Kohlendioxid wird in einem Kreislauf in die Kathode zurückgeführt. Die Oxidation des Brennstoffs und die Reduktion des Sauerstoffs laufen also getrennt voneinander ab. Die Betriebstemperatur liegt in der Regel zwischen 550°C und 750°C. MCFC-Zellen transformieren die im Brennstoff gebundene chemische Energie also direkt und effizient in elektrische Energie.

Eine konventionelle Kathode besteht aus einer elektrochemisch aktiven Elektrodenschicht aus Nickeloxid, die zum Beispiel mittels sog. Coating-Verfahren hergestellt wird. Dabei wird ein Gemisch aus feinen, pulverförmigen Nickelfilamenten und polymeren Bindemitteln auf ein stabilisierendes Elektrodensubstrat, einen Kathodenschaum (bspw. Nickelschaum) aufgebracht. Die Auftragsmenge wird durch das gewünschte Nickelgewicht pro Flächeneinheit der Kathode bestimmt. Wenn die fertige MCFC-Zelle erstmals angefahren und auf Betriebstemperatur gebracht wird, werden die polymeren Bindemittel ausgebrannt und das sowohl im Kathodenschaum als auch in der elektrochemisch aktiven Elektrodenschicht enthaltene metallische Nickel zu Nickeloxid oxidiert.

Andere Verfahren zur Herstellung von MCFC-Kathoden verarbeiten eine Pulverschüttung trocken nach dem "dry doctoring-Verfahren" und einem Sinterprozess zu einer metallischen, mikroporösen Elektrodenschicht. Auch diese werden im Anfahren der MCFC zu einer porösen Nickeloxidkomponente oxidiert, wobei jedoch kein Bindemittel ausgebrannt wird.

Die beim Betrieb der MCFC-Zelle ablaufende Kathodenreaktion, bei der Sauerstoff reduziert und mit Kohlendioxid zu Karbonationen umgesetzt wird, die in den Elektrolyten wandern, ist ein sehr komplexer Prozess, da daran die drei Phasen Elektrode, Kathodengas und Elektrolyt beteiligt sind. Daher ist die Morphologie der Kathode ein wesentlicher Faktor für eine optimal ablaufende Kathodenreaktion. Ein Aspekt der Morphologie der Kathode ist die Porosität der elektrochemisch aktiven Kathodenschicht. Diese Porosität ist im Prinzip das Resultat des Ausbrennens der Bindemittel, wobei Hohlräume zurückbleiben, die letztendlich von der Art der für das Ausgangsmaterial verwendeten Partikel abhängt. In dem Fall, dass als Augangsmaterial für die Herstellung pulverförmige Nickelfilamente und ein Bindemittel verwendet wird, gibt es keine Möglichkeit, Größe und Verteilung der entstehenden Poren aktiv zu kontrollieren.

In der Regel wird eine bimodale Porenverteilung angestrebt, bei welcher Poren mit zwei unterschiedlichen Porengrößen nebeneinander in der elektrochemisch aktiven Kathodenschicht existieren. Im Betrieb dienen die größeren Poren (im Folgenden: Gastransportporen) dem Gastransport innerhalb der Elektrode, während in den kleineren, mit geschmolzenem Elektrolyten gefüllten Poren (im Folgenden: Reaktionsporen) die elektrochemische Reaktion stattfindet.

Die US 4 150 076 offenbart eine Brennstoffzellenelektrode und ein Verfahren zu deren Herstellung, bei dem erste Partikel (Katalysator) mit CO-Agglomeraten aus zweiten Partikeln, Bindemittel und Porenbildnermaterial gemischt werden.

Im Stand der Technik sind Verfahren bekannt, mit denen die Größe und Verteilung der entstehenden Poren aktiv kontrolliert werden sollen. Die DE 1 907 326 A1 beschreibt ein Verfahren, bei dem zur Herstellung eines Elektrodenmaterials ein Porenbildner, der sich beim Sintern verflüchtigt, in einer Kugelmühle auf eine Teilchengröße von ca. 5µm bis 25µm zerkleinert und unmittelbar anschließend Nickelpulver in der Kugelmühle untergemischt wird. Dadurch soll in der fertigen Elektrode eine gleichmäßig feine Porenstruktur erreicht werden. Die US 4,410,607 offenbart ein Verfahren zur Herstellung einer Elektrode mit einer bimodalen Porenverteilung, d.h. mit einer Verteilung von kleinen und großen Poren, bei dem feines Nickeloxid mit einem Bindemittel vermischt und anschließend zu großen, agglomerierten Partikeln vermahlen wird.

Diese Verfahren haben gemeinsam, dass sowohl die Größe als auch die Verteilung der Poren nicht unmittelbar, sondern nur mittelbar von der Wahl der Ausgangsmaterialien, insbesondere der Wahl der Partikel für das Elektrodenmaterial, beeinflusst werden können, d. h. in Abhängigkeit des gewählten Ausgangsmaterials stellt sich ein zugehöriges Porenspektrum selbsttätig ein. Die Größe der Partikel des Elektrodenausgangsmaterials kann im Hinblick auf die Leistung aber nicht frei gewählt werden. Die Leistung der im Stand der Technik bekannten Elektroden ist begrenzend für die Leistungsdichte des Gesamtsystems einer MCFC-Zelle, und die Leistung der Elektroden hängt wiederum in erster Linie von ihrem Porenspektrum, d. h. der Größe und Verteilung der einzelnen Poren ab. Die Lebensdauer einer MCFC-Zelle wird ferner entscheidend von der eingebrachten Elektrolytmenge beeinflusst, die ebenfalls von Größe und Zahl der Reaktionsporen abhängt.Die Menge des in die mikroporösen Elektroden ohne Leistungsverlust einbringbaren Elektrolyten ist stark von Größe und Verteilung der Poren der MCFC-Elektroden abhängig.

Die Aufgabe der vorliegenden Erfindung besteht somit darin, ein Verfahren zur Herstellung einer Elektrode der o.g. Art vorzuschlagen, deren Porenspektrum im Hinblick auf Leistungsdichte und Lebensdauer von MCFC-Zellen optimiert ist.

Die Lösung besteht in einem Verfahren mit den Merkmalen des Anspruchs 1. Das erfindungsgemäße Verfahren zeichnet sich dadurch aus, dass in die Mischung zusätzlich mindestens ein Abbildungsmaterial in Form von zweiten Partikeln oder ein beim Trocknen oder Erwärmen der Mischung zweite Partikel ergebendes Material eingebracht wird, und zwar in einer solchen Menge und Größe, dass das Abbildungsmaterial das Porenbildnermaterial zumindest zu einem großen Teil umkleidet, und dass nach dem Ausbrennen von dem Abbildungsmaterial begrenzte Hohlräume zurückbleiben. Die zweiten Partikel sind dabei kleiner als erste Partikel, aus dem das Elektrodenmaterial besteht und kleiner als die Partikel des Porenbildnermaterials.

Zusätzlich zum Elektrodenmaterial und zum Porenbildnermaterial wird also ein sog. Abbildungsmaterial in die Mischung zur Herstellung einer Elektrode gegeben. Das Abbildungsmaterial dient dazu, die Partikel des Porenbildnermaterials in der Mischung zumindest zu einem großen Teil zu umkleiden. Nach dem Ausbrennen des Porenbildnermaterials verbleibt gewissermaßen eine "Negativform" des umkleideten Partikels, also ein vom Abbildungsmaterial umschlossener Hohlraum, der als Gastransportpore oder Reaktionspore dient.

Das erfindungsgemäße Verfahren ermöglicht es, dass das Porenspektrum aktiv und unmittelbar beeinflusst werden kann, so dass das Porenspektrum unabhängig von der Größe der ersten Partikel des Elektrodenausgangsmaterials im Hinblick auf Leistungsdichte und Lebensdauer einer MCFC-Zelle gezielt und kontrollierbar optimiert werden kann. Insbesondere können Reaktionsporen dargestellt werden, die kleiner sind, als es durch die Wahl des Ausgangsmaterials für die ersten Partikel nur möglich wäre. Die Leistung der erfindungsgemäßen Elektrode mit optimiertem Porenspektrum ist gegenüber dem Stand der Technik deutlich erhöht, da der Polarisationswiderstand signifikant abgesenkt ist. Die Toleranz für höhere Elektrolytfüllgrade ist ohne Leistungseinbußen deutlich gesteigert, so dass die Lebensdauer wesentlich erhöht ist. Die Erhöhung der Leistungsdichte und Standzeit einer mit erfindungsgemäßen Elektroden bestückten MCFC-Zelle führt direkt zu einer wesentlichen Kostenersparnis sowohl in Bezug auf den Zellstapel als auch auf das Gesamtsystem der Brennstoffzelle. Vorteilhafte Weiterbildungen ergeben sich aus den Unteransprüchen.

Die nach dem erfindungsgemäßen Verfahren hergestellte Elektrode besitzt ein Porenspektrum, das eine Häufung des durch die zweiten Partikel abgebildeten Porenbildnermaterials als Poren aufweist.

Die das Abbildungsmaterial darstellenden zweiten Partikel begrenzen Hohlräume, die als Gastransportporen und/oder Reaktionsporen dienen.

Als Porenbildnermaterial für die (größeren) Gastransportporen werden vorzugsweise Substanzen gewählt, die spätestens bei Erreichen der Betriebstemperatur der MCFC-Brennstoffzelle (ca. 600°C bis 650°C) rückstandsfrei ausbrennen. Derartige Porenbildner sind dem Fachmann bekannt. Mögliche Porenbildner sind bspw. verschiedene Arten von Fasern, wobei sowohl verzweigte Fasern als auch unverzweigte Fasern zum Einsatz kommen können. Der Durchmesser der Fasern kann bspw. zwischen 5µm und 50µm liegen, wobei ein Bereich von 5µm bis 20µm bevorzugt ist. Die Länge der Fasern kann bspw. 10µm bis 500µm, vorzugsweise 100µm bis 200µm betragen. Geeignete Fasern sind bspw. Polyethylenfasern, Cellulosefasern, Karbonfasern jeglicher Art, Fasern aus karbonisiertem Polyacrylnitrit, Fasern auf Nylonbasis, Seidenfasern und jede vergleichbare Faserart.

Als Porenbildnermaterial für die (kleineren) Reaktionsporen werden vorzugsweise ebenfalls Substanzen gewählt, die spätestens bei Erreichen der Betriebstemperatur der MCFC-Brennstoffzelle (ca. 600°C bis 650°C) rückstandsfrei ausbrennen. Derartige Porenbildner sind dem Fachmann bekannt. Bevorzugt sind Porenbildner, die eine sphärische oder spratzige Form aufweisen. Der Durchmesser der Porenbildner kann bspw. zwischen 1µm und 5µm liegen, wobei ein Wert von 3µm bevorzugt ist. Unter dem Durchmesser der Porenbilner wird der mittlere Durchmesser eines das Porenbilnerpartikel gedanklich einhüllenden Körpers verstanden. Ohne Anspruch auf Vollständigkeit sind folgende Stoffe als Porenbildner für elektrolytgefüllte Reaktionsporen denkbar: Graphitpulver und -stäube, Rußpulver und -stäube, Kohlenstoffpulver und - stäube, Salze, welche sich im Elektrolyten lösen oder als Elektrolyt dienen, Harzemulsionen, Wachsemulsionen, organische Pigmente sowie jegliche Art von Zuckerverbindungen und Stärken.

Das sog. Abbildungsmaterial, das sind die zweiten Partikel, dient dazu, die Partikel aus den Porenbildnermaterialien zumindest zu einem großen Teil zu umkleiden. Wenn die Porenbildnermaterialien rückstandsfrei ausgebrannt sind, bleibt das Abbildungsmaterial zurück und umschließt einen Hohlraum, der zuvor von dem jeweiligen Partikel ausgefüllt war. Mit anderen Worten: Die vom Porenbildnermaterial gebildete Pore ist im Ausgangsmaterial durch das Abbildungsmaterial abgebildet. Das bedeutet, dass die Pore, d. h. der vom Abbildungsmaterial umschlossene Hohlraum einen Durchmesser aufweist, der dem Durchmesser des zuvor vorhandenen Partikel aus Porenbildnermaterial entspricht. Damit können Poren definierter Größe und definierter Menge erzeugt werden, die eine optimale Leistung ergeben. Insbesondere Können Poren erzeugt werden, die nicht von der Art der ersten Partikel abhängen, die das Elektrodengrundgerüsts bilden (welche sich aus dem Filamentpulver ergeben).

Als Abbildungsmaterial eignen sich bspw. Partikel, die von Hause aus oder nach dem Ausbrennen des Porenbildnermaterials eine sphärische, würfelförmige oder spratzige Form und vorteilhafterweise einen Partikeldurchmesser bis zu 3µm, vorzugsweise von weniger als 1µm aufweisen. Unter Partikeldurchmesser wird der mittlere Durchmesser eines das von Natur aus unregelmäßige Partikel gedanklich einhüllenden Körpers verstanden. Geeignet sind insbesondere Metallpulver, Metalloxidpulver, Metalloxidhydrate sowie anorganische oder organische Metallsalze. Beispielhaft dafür stehen pyrolysierbare Nickelverbindungen wie zum Beispiel Nickelsalze, bevorzugt Nickelnitrat oder Nickelacetat, die beim Trocknen oder Erwärmen entsprechende Partikel bilden. Eine in-situ-Erzeugung des Nickelsalzes durch Zugabe von Säure (bevorzugt Essigsäure oder Salpetersäure) zur nickelhaltigen Mischung, bspw. zum nickelhaltigen Schlicker, ist ebenfalls möglich. Als Abbildungsmaterial ist auch feines oder ultrafeines Nickeloxidpulver geeignet. Schließlich eignen sich auch Nickeloxidhydrat-Präparate, welche in an sich bekannter Weise durch Fällung aus nickelhaltigen Lösungen erhalten werden können. Das Abbildungsmaterial kann auch aus dem Material für das Elektrodengerüst (d.h. der aktiven Elektrodenschicht) bestehen, jedoch kleiner, was die Partikelgröße anbetrifft, in Form eines vorzugsweise feinen oder ultrafeinen Pulvers.

Das Verhältnis von Nickel (Gesamtmenge) zu Porenbildnermaterial bewegt sich vorzugsweise in einem Bereich von 1:1 bis 10:1 Gewichtsteilen. Insbesondere das als Abbildungsmaterial geeignete Nickeloxidpulver weist sphärische oder würfelförmige Partikel mit einer definierten Größe auf, so dass diese Berechnung einfach durchzuführen ist. Der Gewichtsanteil des notwendigen Abbildungsmaterials bewegt sich dabei in der Regel in einem Bereich von 3 bis 15 Gew.-% bezogen auf die Gesamtmenge der herzustellenden Mischung. Die Menge des Abbildungsmaterials kann vorzugsweise derart gewählt werden, dass eine zumindest nahezu vollständige Umkleidung der Partikel des Porenbildnermaterials möglich ist.

Die Menge des Abbildungsmaterials wird von den Abmessungen der (ersten) Partikel des verwendeten Abbildungsmaterials und den Abmessungen des Porenbildnermaterials bestimmt. Diese Abmessung folgt für jeden Typ von Abbildungsmaterial einer bestimmten statistischen Verteilung, so dass die notwendige Menge an Abbildungsmaterial (abhängig von der Abmessung der Partikel und Größe der zu umkleidenden Oberfläche) erfahrungsgemäß gut bestimmt werden kann. Das heißt, dass auch bei einer homogenen Verteilung ausreichend viele zweite Partikel vorhanden sind, dass eine weitgehend vollständige Umkleidung der Partikel des Porenbildnermaterials möglich ist. Tatsächlich ist aber davon auszugehen, dass die Menge der Anlagerung nicht nur allein von der statistischen Verteilung der Partikel bestimmt ist, vielmehr spielen auch Adhäsionskräfte eine Rolle. In einer Suspension enthaltene Partikel neigen nämlich dazu, Agglomerate zu bilden, einfach , deshalb, weil kleine Teilchen aufgrund von molekularen Anziehungskräften sich an größere Teilchen anlagern. Zur gezielten Steuerung der Anlagerung kann das Porenbildnermaterial und das Abbildungsmaterial, das partikelförmig oder als Lösung vorliegen kann, miteinander vermischt werden, bevor sie mit weiteren Materialien im Elektrodenschlicker verarbeitet werden. Sofern eine Lösung vorliegt, werden geeignete Partikel beim Trocknen oder Erwärmen des Grünlings gebildet.

Das Elektrodenmaterial, das Porenbildnermaterial und das Abbildungsmaterial können zusammen in dem Fachmann bekannter Weise zu einem Elektrodenschlicker verarbeitet werden. Wie erwähnt, können das Porenbildnermaterial und das Abbildungsmaterial in vorteilhafter Weise aber auch vorab miteinander vermischt werden, da dann die Umkleidung des Porenbildnermaterials mit dem Abbildungsmaterial vereinfacht wird.

Die vorliegende Erfindung ist nicht auf wässrige Systeme beschränkt, sondern kann bspw. auch auf alkoholische Systeme angewandt werden, wobei hier keine Nickelsalze, sondern bspw. Nickeloxidpartikel als Abbildungsmaterial verwendet werden.

Die vorliegende Erfindung ist ferner nicht auf Elektroden beschränkt, die aus einem Nickel-Schlickersystem hergestellt werden. Sie eignet sich vielmehr bspw. auch für Elektroden, die durch Pulverpressung hergestellt werden (sog. "Dry-Doctoring"-Systeme). Dabei wird das Porenbildnermaterial vor der Einbringung in die trockene Pulvermischung mit dem Abbildungsmaterial umkleidet, bspw. in einem vorhergehenden Imprägnierungs- oder Mischungsschritt o. dgl..

Ausführungsbeispiele der vorliegenden Erfindung werden im Folgenden anhand der beigefügten Zeichnungen näher beschrieben. Es zeigen in einer schematischen, nicht maßstabsgetreuen Darstellung:
- Figur 1: eine Darstellung einer Gastransportpore in einer erfindungsgemäßen Elektrode;
- Figur 2: eine Darstellung von Reaktionsporen in einer erfindungsgemäßen Elektrode;
- Figur 3: Impedanzspektren einer ersten Ausführungsform einer erfindungsgemäßen Elektrode sowie einer Referenzelektrode;
- Figur 4: eine graphische Darstellung der Spannungsunterschiede in Laborstapeln zwischen Zellen mit erfindungsgemäßen Elektroden und Zellen mit Referenzelektroden;
- Figur 5: ein Porenspektrum einer erfindungsgemäßen Elektrode sowie einer Referenzelektrode;
- Figur 6: Impedanzspektren einer zweiten erfindungsgemäßen Elektrode mit unterschiedlichen Elektrolytmengen sowie einer Referenzelektrode mit einer Standardelektrolytmenge.

Ein Ausführungsbeispiel einer erfindungsgemäßen Elektrode auf Nickelbasis kann wie folgt hergestellt werden:

Als Ausgangsmaterial (erste Partikel) eignen sich prinzipiell alle dem Fachmann bekannten Nickelpulver. Vorzugsweise werden filamentartige Nickelpulver verwendet, wie bspw. die unter der Bezeichnung Ni-210, Ni-240, Ni-255 oder Ni-287 bekannten Nickelpulver.

Eine beispielhafte Rezeptur für eine Elektrode mit Gastransportporen sieht wie folgt aus:

| | |
|---|---|
| Nickelpulver (Ni210-Filamentpulver) | 30-50 Gew.-% |
| Porenbildnermaterial (Fasermaterial, karbonisiertes Polyacrylnitrit, Durchmesser etwa 5µm, Länge etwa 100µm) | 5-10 Gew.-% |
| Abbildungsmaterial Nickelacetat-Tetrahydrat | 3-15 Gew.-% |
| Wasser | 10-20 Gew.-% |
| Organische Bindemittel (Moviol, Glycerin, Agitan) | Rest |

Das Fasermaterial und das Nickelacetat-Tetrahydrat werden innig miteinander vermischt und die resultierende Mischung mit den restlichen Komponenten in bekannter Weise zu einem Elektrodenschlicker verarbeitet. Der Elektrodenschlicker wird auf eine Unterlage, z. B. ein Elektrodensubstrat (Nickelschaum) aufgebracht und getrocknet. Die Auftragsmenge wird durch das gewünschte Nickelgewicht pro Flächeneinheit bestimmt. Die resultierenden Grünlinge werden in an sich bekannter Weise zu einer Kathode für eine MCFC-Brennstoffzelle verarbeitet. Beim Anfahren der Brennstoffzelle werden die organischen Bindemittel und das Porenbildnermaterial ausgebrannt, und das Nickel des Nickelschaums und der elektrochemisch aktiven Schicht wird zu Nickeloxid oxidiert. Das Nickelacetattetrahydrat wird zu Nickeloxid umgewandelt.

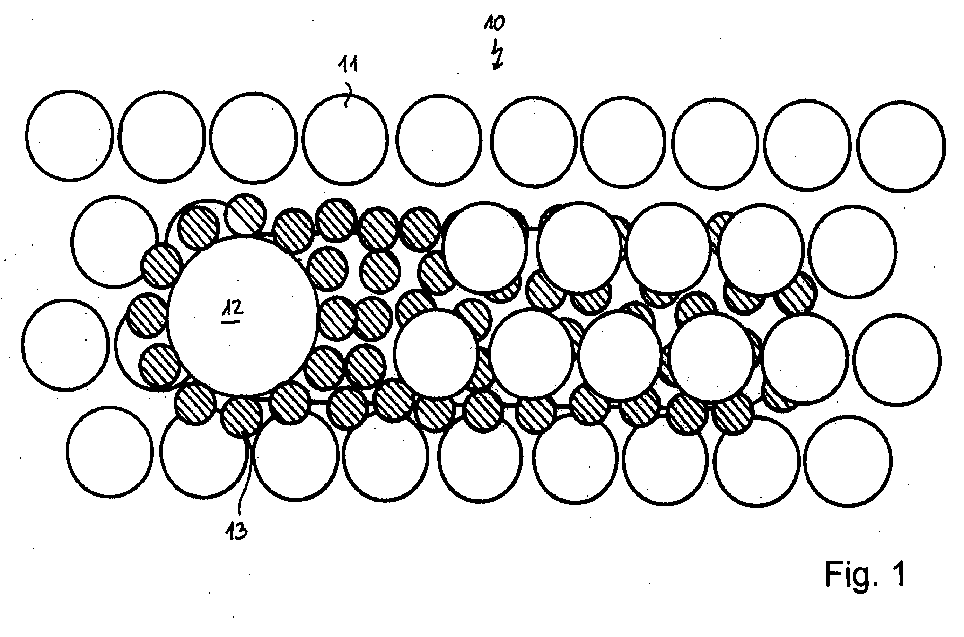

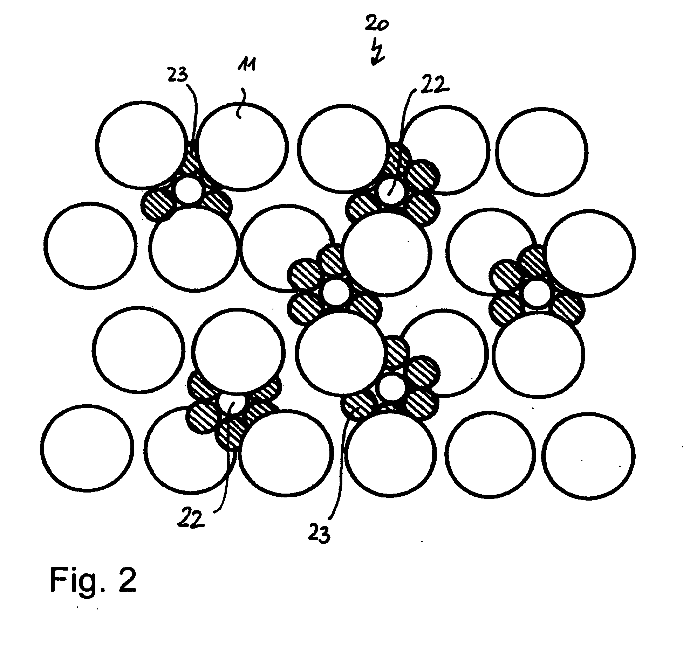

Die Figuren 1 und 2 zeigen beispielhaft die Struktur der aus dem beschriebenen Verfahren resultierenden Elektroden. Figur 1 zeigt eine elektrochemisch aktive Schicht 10 mit ersten Partikeln, nämlich Nickeloxidpartikeln 11. Ein länglicher Hohlraum 12 wird ursprünglich durch die als Porenbildner geeigneten Materialien (hier Fasern) gebildet und durch zweite Partikel, nämlich feinste Nickeloxidpartikel 13 begrenzt und dient als Gastransportpore. Die ersten Partikel 11 sind größer als die zweiten Partikel. Eine solche Struktur entsteht bspw. mit der oben angegebenen Rezeptur.

Figur 2 zeigt in vergleichbarer Weise eine elektrochemisch aktive Schicht 20 mit (ersten) Nickeloxidpartikeln 11. Zahlreiche sphärische Hohlräume 22 werden durch feinste (zweite) Nickeloxidpartikel 23 begrenzt und dienen als Reaktionsporen. Die Herstellung erfolgt entsprechend der oben angegebenen Rezeptur, wobei das oben angegebene Porenbildnermaterial durch ein für die Herstellung von Reaktionsporen geeignetes Porenbildnermaterial ersetzt wird. Es fällt auf, dass der Durchmesser der Hohlräume 22 kleiner ist als die Hohlräume, welche die ersten Nickeloxidpartikel 11 selbst bilden, die das Elektrodengerüst darstellen. Eine solche Struktur kann mit den im Stand der Technik bekannten Verfahren nicht hergestellt werden.

Selbstverständlich kann die oben angegebene Rezeptur zugleich Porenbildnermaterialien sowohl für die Herstellung von Gastransportporen als auch für die Herstellung von Reaktionsporen enthalten. Dann entsteht eine elektrochemisch aktive Schicht mit bimodaler Struktur/Porenverteilung, d.h. Poren verschiedener Größe, deren Größe und Verteilung in der elektrochemisch aktiven Schicht durch die Auswahl der Porenbildnermaterialien und ihre Umkleidung mit dem Abbildungsmaterial aktiv und unmittelbar beeinflusst werden kann. Das Verhältnis der Anzahl von Poren unterschiedlicher Art kann über das Mengenverhältnis der eingesetzten Porenbildnermaterialien gesteuert werden.

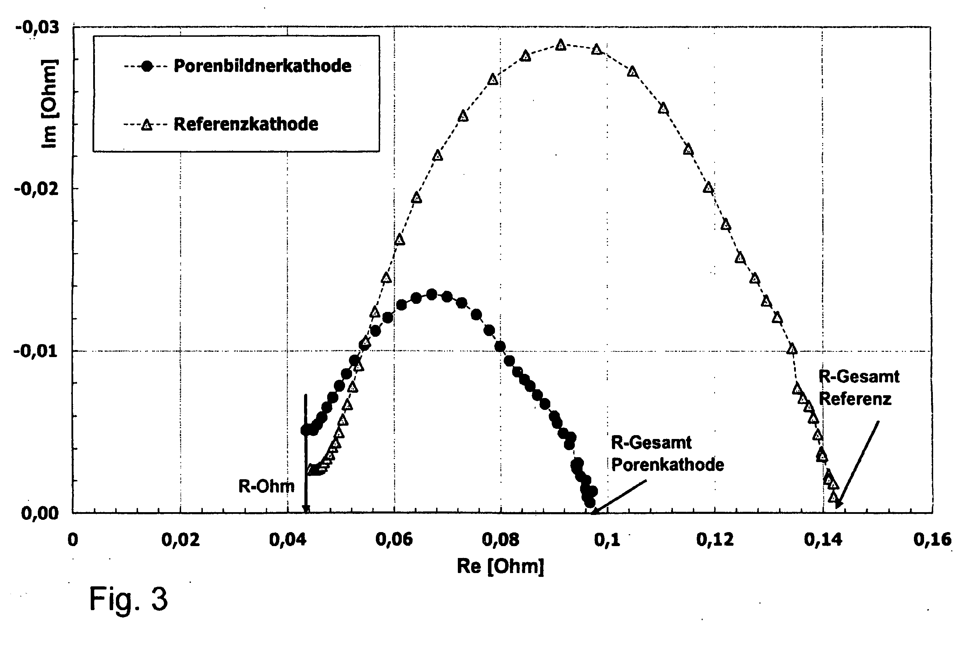

Nach dem obigen Verfahren hergestellte erfindungsgemäße Kathoden (im Folgenden: Porenbildnerkathoden) mit gezielt eingebrachten Gastransportporen (vgl. Figur 1) wurden im Vergleich zu mit herkömmlichen Verfahren hergestellten Standardkathoden (im Folgenden: Referenzkathoden) untersucht. Figur 3 zeigt das Impedanzspektrum (Nyquistplot) einer Porenbildnerkathode (schwarze Kreise) und einer Referenzkathode (graue Dreiecke) in einer Halbzellenmessung, bei der die Elektroden mit einer Standardelektrolytmenge von 0,42 x der Nickelauftragsmenge befüllt wurden. Die Impedanzspektren wurden bei Messungen in einem Kathodenhalbzellenteststand (vgl. "Mechanistische Untersuchung und Modellierung der Kathodenreaktion in Karbonatbrennstoffzellen (MCFC)", M. Bednarz, Dissertation, Universität Hamburg 2002) erhalten. Dabei wurden pro Halbzellentest jeweils zwei identische Kathoden (einmal als Arbeitselektrode und einmal als Gegenelektrode) eingesetzt. Die Kathodenprüflinge hatten dabei jeweils eine Fläche von 9cm². Es ist deutlich erkennbar, dass bei nahezu identischem ohmschem Widerstand (R-Ohm) von 45-50mΩ für die Porenbildnerkathode und für die Referenzelektrode der Gesamtwiderstand (R-Gesamt) für die Porenbildnerkathode mit ca. 100mΩ deutlich geringer ist als der Gesamtwiderstand für die Referenzelektrode mit ca. 140mΩ. Die Porenbildnerkathode ist also der Referenzelektrode überlegen.

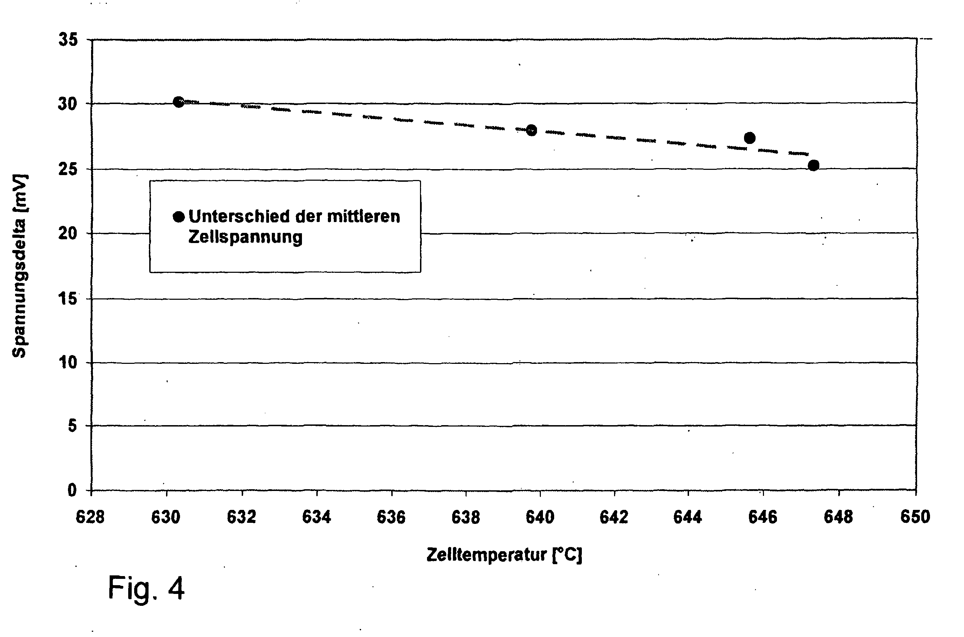

Die Übertragbarkeit der Halbzellentests in die Vollzelle wurde mittels Laborstapelversuchen demonstriert. Zur Darstellung der Leistungsfähigkeit der Porenbildnerkathoden und um einen direkten Vergleich zu ermöglichen, wurde ein Laborstapel sowohl mit Porenbildnerkathoden (Gruppe 1) als auch mit Referenzkathoden (Gruppe 2) ausgerüstet. Figur 4 zeigt den Unterschied der mittleren Zellspannung dieser beiden Zellgruppen bei verschiedenen Zelltemperaturen zwischen 630°C und 648°C. Die Zellen mit Porenbildnerkathoden zeigen in allen Fällen eine bessere Leistung als die Zellen mit Referenzkathoden. Die Zellspannungsdifferenz variiert mit einer Stromdichte von 120mA/cm² zwischen 25mV und 30mV. Dabei ist zu bemerken, dass die Zellspannungsdifferenz mit abnehmender Temperatur zunimmt. Das bedeutet, dass die Überlegenheit der Porenbildnerkathode bei einer Absenkung der Zelltemperaturen deutlicher zu Tage tritt. Eine Absenkung der Zelltemperaturen geht mit verlängerten Stapellebenszeiten einher. Die Zellen mit Porenbildnerkathoden zeigten also bei erhöhter Lebensdauer eine bessere Leistung als die Zellen mit Referenzkathoden.

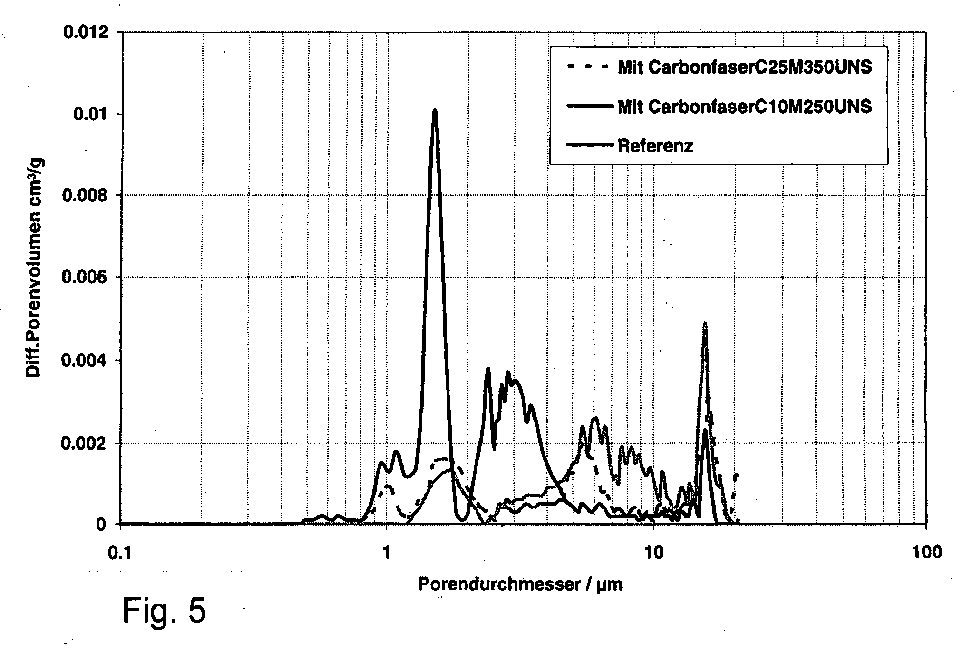

Figur 5 zeigt die Porenspektren für eine Referenzelektrode (schwarz, durchgezogen) und zwei Elektroden mit Porenbildnern, einmal mit der Karbonfaser C10M250UNS (grau) und einmal mit der Karbonfaser C25M350UNS (schwarz, gestrichelt). Die Porenbildnerkathoden wurden im Übrigen mit der oben beschriebenen Rezeptur hergestellt. Alle drei Kathoden wurden im ausgebrannten Zustand, d. h. nach rückstandsfreier Verbrennung der Karbonfasern vermessen. Es wird deutlich, dass in der Referenzkathode in der Hauptsache Poren mit einem Durchmesser von 1µm bis 3µm vorliegen. In den beiden Porenbildnerkathoden ist ebenfalls ein Anteil kleiner Poren mit einem Durchmesser von etwa 2µm enthalten, jedoch in einem geringeren Anteil als bei der Referenzkathode. Zusätzlich sind aber auch größere Poren mit Durchmessern im Bereich von 5µm bis 10µm vorhanden.

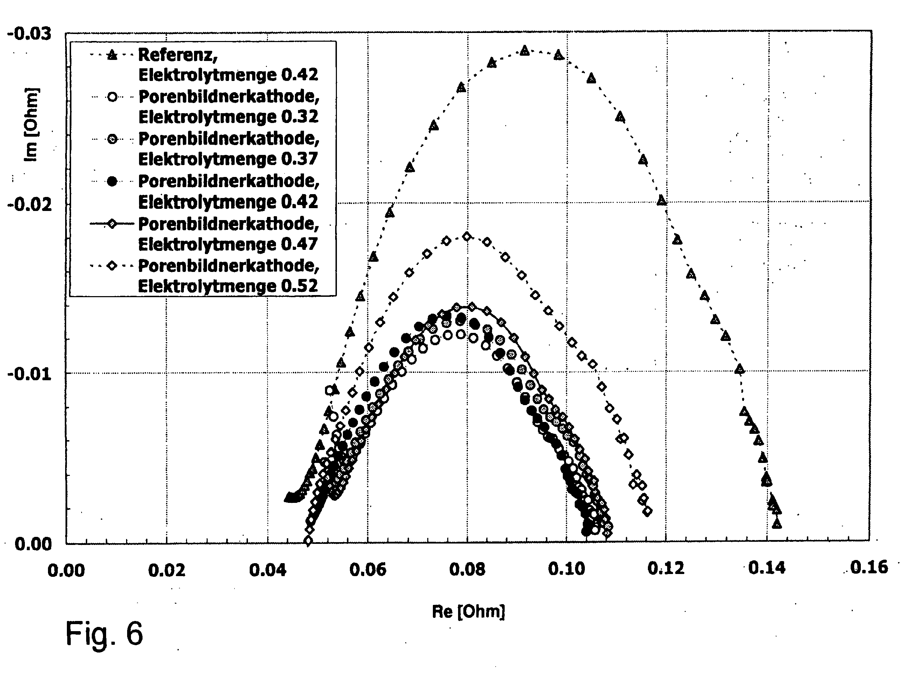

Figur 6 zeigt das Impedanzspektrum (Nyquistplot) einer Porenbildnerkathode (Kreise bzw. Diamantsymbole) und einer Referenzkathode (graue Dreiecke) in einer Halbzellenmessung, wie sie für Figur 3 bereits beschrieben wurde. Die Porenbildnerkathode wurde mit unterschiedlichen Elektrolytmengen von 0,32 bis 0,52 × der Nickelauftragsmenge befüllt. Die Referenzkathode wurde mit einer Standardelektrolytmenge von 0,42 × der Nickelauftragsmenge befüllt. Die Impedanzspektren wurden bei Messungen in einem Kathodenhalbzellenteststand erhalten (vgl. Beschreibung zu Figur 3). Dabei wurden pro Halbzellentest jeweils zwei identische Kathoden (einmal als Arbeitskathode und einmal als Gegenelektrode) eingesetzt. Alle getesteten Kathoden besitzen sehr ähnliche ohmsche Widerstände im Bereich von 45mΩ bis 50mΩ. Eine leichte Verschiebung des ohmschen Widerstandes zu höheren Werten mit zunehmendem Elektrolytfüllgrad ist dabei üblich. Es wird jedoch deutlich, dass die Porenbildnerkathode selbst bei hohen Elektrolytbefüllungen (Gesamtwiderstand von etwa 115mΩ für die 0,52-Befüllung) noch geringere Gesamtwiderstände zeigt als die Referenzkathode, welche einen R-Gesamt von etwa 140mΩ aufweist. Bezüglich der Füllgradtoleranz bei höheren Elektrolytfüllgraden und infolgedessen auch bezüglich der Lebensdauer zeigt sich die Porenbildnerkathode damit überlegen.

## Patentansprüche

1. Verfahren zur Herstellung einer Elektrode für eine Schmelzkarbonatbrennstoffzelle, wobei zur Herstellung einer elektrochemisch aktiven Elektrodenschicht (10, 20) eine Mischung hergestellt wird, die mindestens ein aus ersten Partikeln (11) bestehendes Elektrodenmaterial, mindestens ein Porenbildnermaterial und mindestens ein Bindemittel enthält, und wobei der resultierende Grünling erhitzt wird, so dass das mindestens eine Porenbildnermaterial und das mindestens ein Bindemittel ausgebrannt werden,
**dadurch gekennzeichnet,**
**dass** in die Mischung vor dem Ausbrennen zusätzlich mindestens ein Abbildungsmaterial in Form von zweiten Partikeln (13, 23) oder in Form eines beim Trocknen oder Erwärmen der Mischung zweite Partikel (13, 23) ergebenden Materials eingebracht wird, dass in dem Grünling die zweiten Partikel (13, 23) kleiner als die ersten Partikel (11) und kleiner als die Partikel des Porenbildnermaterials sind, dass die zweiten Partikel (13, 23) in einer solchen Menge und in einer solchen Größe eingebracht werden, dass das Abbildungsmaterial (13, 23) das Porenbildnermaterial zumindest zu einem großen Teil umkleidet, und dass nach dem Ausbrennen von dem Abbildungsmaterial begrenzte Hohlräume (12, 22) zurückbleiben.

2. Verfahren nach Anspruch 1,
**dadurch gekennzeichnet,**
**dass** der Grünling vor dem Erhitzen auf ein Elektrodensubstrat aufgebracht und als Elektrodensubstrat ein Metallschaum, vorzugsweise Nickelschaum, verwendet wird.

3. Verfahren nach Anspruch 1 oder 2,
**dadurch gekennzeichnet,**
**dass** als Porenbildnermaterial Substanzen verwendet werden, die spätestens bei Temperaturen von 600°C bis 650°C rückstandsfrei ausbrennen.

4. Verfahren nach einem der Ansprüche 1 bis 3,
**dadurch gekennzeichnet,**
**dass** als Porenbildnermaterial verzweigte oder unverzweigte Fasern ausgewählt werden, die einen Durchmesser von 5µm bis 50µm, vorzugsweise 5µm bis 20µm, und/oder eine Länge von 10µm bis 500µm, vorzugsweise 100µm bis 200µm, aufweisen.

5. Verfahren nach einem der Ansprüche 1 bis 3,
**dadurch gekennzeichnet,**
**dass** als Porenbildnermaterial Partikel mit einer sphärischen oder spratzigen Form ausgewählt werden, die einen Durchmesser von 1µm bis 5µm, vorzugsweise 3µm, aufweisen.

6. Verfahren nach einem der Ansprüche 1 bis 5,
**dadurch gekennzeichnet,**
**dass** als Abbildungsmaterial Partikel mit einer sphärischen, würfelförmigen oder spratzigen Form ausgewählt werden, die insbesondere einen Durchmesser von bis zu 3µm, vorzugsweise unter 1µm, aufweisen.

7. Verfahren nach einem der Ansprüche 1 bis 6,
**dadurch gekennzeichnet,**
**dass** die ersten Partikel (11) eine Größe von 10µm bis 40µm haben.

8. Verfahren nach einem der Ansprüche 1 bis 7,
**dadurch gekennzeichnet,**
**dass** als Abbildungsmaterial Metallpulver, Metalloxidpulver, Metalloxidhydrate, anorganische oder organische Metallsalze verwendet werden.

9. Verfahren nach Anspruch 8,
**dadurch gekennzeichnet,**
**dass** als Abbildungsmaterial pyrolisierbare Nickelverbindungen verwendet werden.

10. Verfahren nach Anspruch 9,
**dadurch gekennzeichnet,**
**dass** pyrolisierbare Nickelsalze, vorzugsweise Nickelnitrat oder Nickelacetat, verwendet werden.

11. Verfahren nach Anspruch 10,
**dadurch gekennzeichnet,**
**dass** die Nickelsalze in situ durch Zugabe von Säure, vorzugsweise Essigsäure oder Salpetersäure, zur nickelhaltigen Mischung erzeugt werden.

12. Verfahren nach Anspruch 8,
**dadurch gekennzeichnet,**
**dass** feines oder ultrafeines Metalloxidpulver, insbesondere Nickeloxidpulver, verwendet wird.

13. Verfahren nach einem der Ansprüche 1 bis 12,
**dadurch gekennzeichnet,**
**dass** das Abbildungsmaterial in einem Anteil von 3 Gew.-% bis 15 Gew.-% bezogen auf die Gesamtmenge der Mischung zugegeben wird.

14. Verfahren nach einem der Ansprüche 1 bis 13,
**dadurch gekennzeichnet,**
**dass** das Porenbildnermaterial und das Abbildungsmaterial zunächst miteinander vermischt werden und dann mit dem mindestens einen Elektrodenmaterial und dem mindestens einen Bindemittel zu der Mischung verarbeitet werden.

15. Verfahren nach einem der Ansprüche 1 bis 14,
**dadurch gekennzeichnet,**
**dass** die Mischung als Elektrodenschlicker oder aus einer Pulvermischung hergestellt wird.

16. Verfahren nach einem der Ansprüche 1 bis 15,
**dadurch gekennzeichnet,**
**dass** die Mischung als wässriges oder alkoholisches System hergestellt wird.

## Claims

1. Process for producing an electrode for a molten carbonate fuel cell, wherein an electrochemically active electrode layer (10, 20) is produced by producing a mixture containing at least one electrode material which consists of first particles (11), at least one pore-former material and at least one binder, and wherein the resulting green compact is heated such that the at least one pore-former material and the at least one binder are burnt out,
**characterized**
**in that** at least one imaging material in the form of second particles (13, 23) or in the form of a material which forms second particles (13, 23) when the mixture is dried or heated is additionally introduced into the mixture before the burning out, in that the second particles (13, 23) are smaller than the first particles (11) and smaller than the particles of the pore-former material in the green compact, in that the second particles (13, 23) are introduced in such a quantity and in such a size that the imaging material (13, 23) sheaths the pore-former material at least to a large part, and in that cavities (12, 22) delimited by the imaging material remain after the burning out.

2. Process according to Claim 1,
**characterized**
**in that** the green compact is applied to an electrode substrate before heating, and the electrode substrate used is a metal foam, preferably nickel foam.

3. Process according to Claim 1 or 2,
**characterized**
**in that** substances which burn out without residue at most at temperatures of 600°C to 650°C are used as the pore-former material.

4. Process according to one of Claims 1 to 3,
**characterized**
**in that** branched or unbranched fibres having a diameter of 5 µm to 50 µm, preferably 5 µm to 20 µm, and/or a length of 10 µm to 500 µm, preferably 100 µm to 200 µm, are selected as the pore-former material.

5. Process according to one of Claims 1 to 3,
**characterized**
**in that** particles of a spherical or irregular form having a diameter of 1 µm to 5 µm, preferably 3 µm, are selected as the pore-former material.

6. Process according to one of Claims 1 to 5,
**characterized**
**in that** particles of a spherical, cubic or irregular form having a diameter, in particular, of up to 3 µm, preferably of less than 1 µm, are selected as the imaging material.

7. Process according to one of Claims 1 to 6,
**characterized**
**in that** the size of the first particles (11) is 10 µm to 40 µm.

8. Process according to one of Claims 1 to 7,
**characterized**
**in that** metal powder, metal oxide powder, metal oxide hydrates, inorganic or organic metal salts are used as the imaging material.

9. Process according to Claim 8,
**characterized**
**in that** pyrolysable nickel compounds are used as the imaging material.

10. Process according to Claim 9,
**characterized**
**in that** pyrolysable nickel salts, preferably nickel nitrate or nickel acetate, are used.

11. Process according to Claim 10,
**characterized**
**in that** the nickel salts are produced in situ by adding acid, preferably acetic acid or nitric acid, to the nickel-containing mixture.

12. Process according to Claim 8,
**characterized**
**in that** fine or ultrafine metal oxide powder, in particular nickel oxide powder, is used.

13. Process according to one of Claims 1 to 12,
**characterized**
**in that** the imaging material is added in a proportion of 3% by weight to 15% by weight, based on the total quantity of the mixture.

14. Process according to one of Claims 1 to 13,
**characterized**
**in that** the pore-former material and the imaging material are firstly mixed with one another and then processed with the at least one electrode material and the at least one binder to form the mixture.

15. Process according to one of Claims 1 to 14,
**characterized**
**in that** the mixture is produced as an electrode slurry or from a powder mixture.

16. Process according to one of Claims 1 to 15,
**characterized**
**in that** the mixture is produced as an aqueous or alcoholic system.

## Revendications

1. Procédé de fabrication d'une électrode pour une pile à combustible à carbonate fondu, un mélange étant fabriqué pour la fabrication d'une couche d'électrode (10, 20) active électrochimiquement, ledit mélange contenant au moins un matériau d'électrode constitué de premières particules (11), au moins un matériau de formation de pores et au moins un liant, et l'ébauche crue résultante étant chauffée de manière à ce que le ou les matériaux de formation de pores et le ou les liants soient brûlés,
**caractérisé en ce qu'**au moins un matériau de formation d'images sous la forme de secondes particules (13, 23) ou sous la forme d'un matériau formant des secondes particules (13, 23) lors du séchage ou du chauffage du mélange est également introduit dans le mélange avant la combustion, **en ce que** les secondes particules (13, 23) sont plus petites que les premières particules (11) et plus petites que les particules du matériau de formation de pores dans l'ébauche crue, **en ce que** les secondes particules (13, 23) sont introduites en une quantité telle et en une taille telle que le matériau de formation d'images (13, 23) recouvre au moins en grande partie le matériau de formation de pores, et **en ce qu'**après la combustion du matériau de formation d'images, des cavités définies (12, 22) demeurent.

2. Procédé selon la revendication 1, **caractérisé en ce que** l'ébauche crue est appliquée sur un substrat d'électrode avant le chauffage et une mousse métallique, de préférence une mousse de nickel, est utilisée en tant que substrat d'électrode.

3. Procédé selon la revendication 1 ou 2, **caractérisé en ce que** des substances qui brûlent sans résidu au plus à des températures de 600 °C à 650 °C sont utilisées en tant que matériau de formation de pores.

4. Procédé selon l'une quelconque des revendications 1 à 3, **caractérisé en ce que** des fibres ramifiées ou non ramifiées, qui présentent un diamètre de 5 µm à 50 µm, de préférence de 5 µ à 20 µm, et/ou une longueur de 10 µm à 500 µm, de préférence de 100 µm à 200 µm, sont choisies en tant que matériau de formation de pores.

5. Procédé selon l'une quelconque des revendications 1 à 3, **caractérisé en ce que** des particules d'une forme sphérique ou irrégulière, qui présentent un diamètre de 1 µm à 5 µm, de préférence de 3 µm, sont choisies en tant que matériau de formation de pores.

6. Procédé selon l'une quelconque des revendications 1 à 5, **caractérisé en ce que** des particules d'une forme sphérique, cubique ou irrégulière, qui présentent notamment un diamètre inférieur ou égal à 3 µm, de préférence inférieur à 1 µm, sont choisies en tant que matériau de formation d'images.

7. Procédé selon l'une quelconque des revendications 1 à 6, **caractérisé en ce que** les premières particules (11) ont une taille de 10 µm à 40 µm.

8. Procédé selon l'une quelconque des revendications 1 à 7, **caractérisé en ce que** des poudres métalliques, des poudres d'oxydes métalliques, des hydrates d'oxydes métalliques, des sels métalliques inorganiques ou organiques sont utilisés en tant que matériau de formation d'images.

9. Procédé selon la revendication 8, **caractérisé en ce que** des composés de nickel pyrolysables sont utilisés en tant que matériau de formation d'images.

10. Procédé selon la revendication 9, **caractérisé en ce que** des sels de nickel pyrolysables sont utilisés, de préférence du nitrate de nickel ou de l'acétate de nickel.

11. Procédé selon la revendication 10, **caractérisé en ce que** les sels de nickel sont formés in situ par ajout d'un acide, de préférence d'acide acétique ou d'acide nitrique, au mélange contenant du nickel.

12. Procédé selon la revendication 8, **caractérisé en ce qu'**une poudre d'oxyde métallique fine ou ultrafine, notamment une poudre d'oxyde de nickel, est utilisée.

13. Procédé selon l'une quelconque des revendications 1 à 12, **caractérisé en ce que** le matériau de formation d'images est ajouté en une proportion de 3 % en poids à 15 % en poids, par rapport à la quantité totale du mélange.

14. Procédé selon l'une quelconque des revendications 1 à 13, **caractérisé en ce que** le matériau de formation de pores et le matériau de formation d'images sont tout d'abord mélangés l'un avec l'autre, puis travaillés avec le ou les matériaux d'électrode et le ou les liants pour former le mélange.

15. Procédé selon l'une quelconque des revendications 1 à 14, **caractérisé en ce que** le mélange est fabriqué sous la forme d'une pâte d'électrode ou à partir d'un mélange pulvérulent.

16. Procédé selon l'une quelconque des revendications 1 à 15, **caractérisé en ce que** le mélange est fabriqué sous la forme d'un système aqueux ou alcoolique.
